# EUROPEAN PATENT SPECIFICATION

(11) **EP 2 895 351 B1**
(45) Date of publication and mention of the grant of the patent: **25.07.2018**
(21) Application number: 13750039.3
(22) Date of filing: 14.08.2013
(51) Int. Cl.: B60Q 1/14

(54) **METHOD FOR OPERATING A FRONTAL HEADLIGHT DEVICE OF A VEHICLE, DRIVER ASSISTANCE DEVICE AND VEHICLE**
VERFAHREN ZUM BETRIEB EINES VORDEREN SCHEINWERFERS EINES FAHRZEUGS, FAHRERASSISTENZVORRICHTUNG UND FAHRZEUG
PROCÉDÉ POUR ACTIONNER UN DISPOSITIF DE PHARE FRONTAL D'UN VÉHICULE, DISPOSITIF D'ASSISTANCE DE CONDUCTEUR ET VÉHICULE

(30) Priority: 13.09.2012 DE 102012018117
(43) Date of publication of application: 22.07.2015
(73) Proprietor: Valeo Schalter und Sensoren GmbH, 74321 Bietigheim-Bissingen (DE)
(72) Inventor: HUE, David, F-95430 Butry sur Oise (FR)
(86) International application number: PCT/EP2013/066966
(87) International publication number: WO 2014/040813

(56) References cited:
- EP-A1- 1 707 438
- DE-A1- 19 928 098
- DE-A1-102007 058 637
- DE-A1-102008 014 182
- DE-A1-102008 060 949
- US-A1- 2006 267 502
- US-A1- 2011 267 455

## Description

The invention relates to a method for operating a frontal headlight device of a vehicle, in which an image of an environmental region in direction of travel in front of the vehicle is captured by means of a camera of the vehicle and the headlight device is switched to a glare shield mode by means of an electronic control device of the vehicle depending on whether a light source of a further vehicle is identified in the image. In addition, the invention relates to a driver assistance device for a vehicle as well as to a vehicle with a driver assistance device.

Adaptive headlight devices for motor vehicles are already prior art. In such headlight devices, the switching to a glare shield mode (activation and deactivation of the glare shield mode) is effected depending on whether or not the light sources of other vehicles are detected. Herein, the headlight device can be switched for example from the high beam to the low beam upon perceiving a light source in order not to glare the other traffic participants. However, alternatively, systems are also known, in which the light lobe radiated by the own headlight device is adaptively varied and herein adapted to the position of the other traffic participants relative to the own vehicle in the glare shield mode. In these systems, the shape of the radiated light lobe is varied such that the other traffic participants are not glared.

For identifying the light sources of other vehicles, usually, a front camera is placed behind the windshield, which provides images of an environmental region in front of the own motor vehicle. Based on these images, then, light sources external to vehicle can be detected, namely in particular the light sources of other vehicles such as for example of a preceding or else of an oncoming vehicle. Depending on this detection, then, the own frontal headlight device can be controlled and herein be switched to the glare shield mode, in which the low beam is turned on or else the light lobe of the high beam is correspondingly varied. In the prior art, switching to the glare shield mode is effected as soon as a light source is identified in the captured images.

Such systems also belong to the prior art, in which the intensity of the radiated light is controlled depending on a measured distance to the preceding or else to the oncoming vehicle. Such an approach is for example described in the document EP 2 067 660 A2 as well as in the document DE 10 2004 013 081 A1.

A similar approach is described in DE 10 2007 058637 A1.

In the headlight systems with the front camera, in particular, the passing maneuvers prove problematic: If another preceding vehicle is passed by the own motor vehicle, for instance on a rural road or the like, thus, the tail lamps of the preceding vehicle exit the field of view of the front camera as soon as the passing maneuver is initiated and the lane is changed. In such a situation, the own motor vehicle is then next to the other vehicle, and the tail lamps of the other vehicle are already outside of the field of view of the camera. Because external light sources now cannot be identified in the captured images, the glare shield mode is turned off and the high beam is automatically activated. If the other vehicle is still next to the own motor vehicle, the driver of the other vehicle can be glared by a reflection of the light on the exterior mirror. In the prior art, thus, a time interval is implemented, only after the elapse of which the glare shield mode can be deactivated.

However, situations are also problematic, in which the own motor vehicle itself is passed by another vehicle. Here, before the passing maneuver, the glare shield mode is still deactivated and the high beam is activated. The tail lamps of the other vehicle cannot be detected in the camera image before the other vehicle is on the same lane in front of the own motor vehicle. However, before automatic activation of the glare shield mode occurs, the driver of the other vehicle can be glared via the exterior mirror, while the other vehicle is on the adjacent lane next to the own motor vehicle.

It is an object of the invention to demonstrate a solution, how in a method of the initially mentioned kind the point of time of switching the frontal headlight device to the glare shield mode can be adjusted such that the driver of the further vehicle is not glared by the light of the headlight device.

According to the invention, this object is solved by a method, by a driver assistance device as well as by a vehicle having the features according to the respective independent claims. Advantageous implementations of the invention are the subject matter of the dependent claims, of the description and of the figures.

A method according to the invention is adapted to operate a frontal headlight device of a vehicle, in particular of a motor vehicle. By means of a camera of the vehicle, an image of an environmental region in direction of travel in front of the vehicle is captured, and by means of an electronic control unit of the vehicle, the headlight device is switched to a glare shield mode depending on whether a light source of a further vehicle is identified in the image. This means that the glare shield mode is activated and deactivated depending on whether or not the control device detects a light source of a further vehicle in the image. Based on sensor data of at least one object detection device disposed on the vehicle, the further vehicle is detected, and a relative position of the further vehicle in direction of travel relative to the own vehicle is determined. The switching of the headlight device is then also performed considering the relative position of the vehicles in direction of travel by means of the control device.

Besides processing and evaluation of the captured image, according to the invention, a relative position of the further vehicle relative to the own vehicle is also determined and taken into account in controlling the headlight device. Such a combination has the advantage that the light sources of other vehicles can be reliably identified based on the image on the one hand, and the point of time of switching to the glare shield mode can also be selected considering the relative position such that - in a passing maneuver - the driver of the further vehicle is not glared on the other hand. Thus, for example, it can already be determined based on the relative position that the further vehicle passes the own vehicle, and the glare shield mode can be turned on in advance, still before the tail lamps of the further vehicle enter the field of view of the camera. On the other hand, in a passing maneuver of the own vehicle, the glare shield mode is only turned off when the own vehicle is in front of the other vehicle. Glare of the driver of the further vehicle is therefore prevented.

Thus, preferably, only the point of time of switching the headlight device to the glare shield mode - and thus the point of time of activation and/or deactivation of the glare shield mode - is determined based on the measured relative position. If the external light source is detected in the image of the camera, thus, the glare shield mode preferably remains activated independent of the relative position.

Preferably, the camera is a video camera, which is able to capture a plurality of frames per time unit. For example, the camera can be a CCD camera or a CMOS camera.

For example, a front camera is used, which is placed behind the windshield of the vehicle. This front camera can e.g. be attached to the windshield. It captures the environment in direction of travel in front of the motor vehicle. In particular, this can imply that a camera axis extending perpendicularly to the plane of an image sensor of the camera is oriented parallel to or along the vehicle longitudinal axis.

Presently, in particular, a mode of the headlight device is understood by a "glare shield mode", in which a low beam is activated or else the lobe of the radiated light is configured depending on the position of the further vehicle relative to the own vehicle. Thus, the glare shield mode is an operating mode different from a high beam mode.

Preferably, the method is performed in the darkness. For identifying the darkness, for example, a corresponding sensor can be employed, which senses the brightness of the ambient light. Depending on the intensity of the ambient light, then, it can be determined if the automatic switching of the headlight device is to be activated.

If a light source of the further vehicle is not identified in the image by means of the control device, based on the sensor data of the object detection device, it can be identified if the further vehicle is on a lane adjacent to the own vehicle. If the further vehicle is on the adjacent lane, thus, the position of the further vehicle in direction of travel relative to the own vehicle can be determined, and switching of the headlight device is then preferably performed depending on the relative position of the two vehicles in direction of travel. By such an approach, the driver of the further vehicle can be prevented from being glared by the light of the headlight device during a passing maneuver. Therein, the glare shield mode is preferably active if the further vehicle protrudes from the own vehicle in direction of travel or else if the exterior mirror of the further vehicle is in front of the headlight device in direction of travel. Thus, the glare shield mode is activated if the further vehicle protrudes from the headlight device in passing of the own vehicle on the one hand. The glare shield mode is further maintained as long as the further vehicle remains in front of the own vehicle, while the own vehicle passes the further vehicle on the other hand.

By the further vehicle, presently, a vehicle is also preferably understood, which moves in the same direction of travel as the own vehicle.

Thus, if a light source is not identified in the image, based on the relative position, it is checked if the glare shield mode is to be activated or deactivated. However, as soon as the external light source is detected in the image and the two vehicles therefore travel on the same lane, preferably, the consideration of the relative position in switching the headlight device is omitted. If the external light source is detected, this means that the further vehicle is in front of the own vehicle. In this case, the glare shield mode remains turned on independent of the measured distance. Only when the external light source exits the field of view of the camera, it is preferably determined when the glare shield mode is again to be deactivated based on the relative position.

If it is detected by means of the control device, that the light source of the further vehicle exits the field of view of the camera, the turned on glare shield mode can then be deactivated depending on the relative position. Herein, the point of time, at which the glare shield mode can again be deactivated, is determined depending on the relative position. Thus, in particular, the driver of the other vehicle is prevented from being glared if the further vehicle is passed by the own vehicle.

After exiting the field of view of the camera by the external light source, the turned on glare shield mode is further maintained for a short time, if it is determined based on the relative position that the own vehicle passes the further vehicle. In particular, the glare shield mode is not deactivated before it is determined based on the relative position or based on the sensor data of the object detection device that the headlight device passes a predetermined reference point of the further vehicle in direction of travel, for instance the exterior mirror or else the front of the further vehicle such that the headlight device is already in front of the further vehicle. In this manner, glare of the driver of the further vehicle is excluded.

It can also occur that the own vehicle is passed by the further vehicle. If a light source is not identified in the image of the camera, and it is detected based on the relative position that the further vehicle passes the own vehicle, the headlight device can be switched to the glare shield mode, before the light source of the further vehicle is identified in the image, namely the tail lamps. Thus, also in the passing maneuver of the further vehicle, it is achieved that the driver of this vehicle is not glared by the light of the headlight device. In particular, the glare shield mode is already activated when it is determined based on the relative position or based on the sensor data of the object detection device that the headlight device is behind a predetermined reference point of the further vehicle in direction of travel, in particular behind the front or behind the exterior mirror of the further vehicle. Thus, the glare of the driver of the further vehicle is excluded.

It proves particularly advantageous if a distance sensor - for instance an ultrasonic sensor - is used as the object detection device, the detection direction of which forms an angle from a range of values from 0° to 45°, in particular from 0° to 20°, with the vehicle transverse axis. Thus, the distance is measured in a direction, which is oriented at an angle from 0°to 45°, in particular from 0° to 20°, with respect to the vehicle transverse axis. For example, this angle can also be 0°, such that the distance is measured along the vehicle transverse axis and thus perpendicularly to the longitudinal axis and perpendicularly to the direction of travel. Here, e.g. an ultrasonic sensor of an automatic parking assistance system can be used as the sensor, which is for example disposed in an edge region of the front bumper. In this manner, the front of the further vehicle can be reliably detected, and it can be determined when the further vehicle protrudes from the own vehicle in direction of travel.

Generally, for example, an ultrasonic sensor and/or a radar sensor and/or an optical sensor (Lidar sensor) and/or a further camera can be used as the object detection device. For example, the further camera can be incorporated in the exterior mirror.

Additionally or alternatively, a wireless communication device can be provided as the object detection device, which wirelessly communicates with a corresponding communication device of the further vehicle. At such a vehicle-to-vehicle communication, the communication device provides data which characterize the distance of the other vehicle from the own vehicle. Thus, the relative position of the vehicles is known.

In addition, the invention relates to a driver assistance device for controlling a frontal headlight device of a vehicle with a camera for capturing an image of an environmental region in direction of travel in front of the vehicle, and with an electronic control device identifying a light source of a further vehicle in the image and switching the headlight device to a glare shield mode depending on the light source. The driver assistance device is formed for performing a method according to the invention.

A vehicle according to the invention, in particular a motor vehicle, even more preferably a passenger car, includes a driver assistance device according to the invention.

The preferred embodiments presented with respect to the method according to the invention and the advantages thereof correspondingly apply to the driver assistance device according to the invention as well as to the vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings. It is emphasized that the embodiment described below represents a preferred embodiment of the invention and the invention thus is not restricted to this exemplary embodiment.

There show:
- Fig. 1: in schematic illustration a motor vehicle with a driver assistance device according to an embodiment of the invention;
- Fig. 2 to 4: in schematic illustration a road situation with the motor vehicle according to Fig 1, wherein a method according to an embodiment of the invention is explained in more detail; and
- Fig. 5 to 7: in schematic illustration a further road situation, wherein a method according to a further embodiment of the invention is explained in more detail.

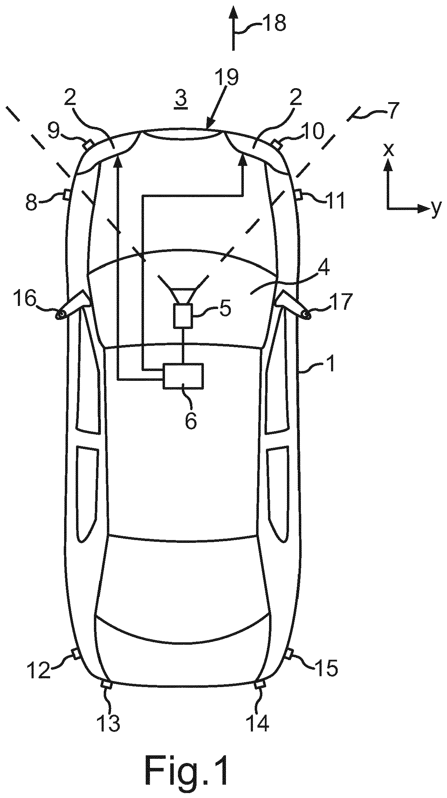

A motor vehicle 1 illustrated in Fig. 1 is for example a passenger car. In known manner, the motor vehicle 1 has two frontal headlights 2, which illuminate an environmental region 3 in front of the motor vehicle 1. The headlights 2 include light sources for the low beam as well as for the high beam as well as optionally for the daytime running lights. Overall, the headlights 2 constitute a frontal headlight device of the motor vehicle 1. The headlights 2 can be switched from a high beam mode to a glare shield mode - in particular in the darkness - wherein either the low beam is activated or else the radiation lobe of the light is configured depending on the current position of other vehicles relative to the motor vehicle 1 in the glare shield mode.

A camera 5 is attached behind a windshield 4 of the motor vehicle 1, which is a front camera and is referred to as front camera. The front camera 5 is a video camera and provides images of the environmental region 3 in front of the motor vehicle 1. The images are conveyed to an electronic control device 6, which processes the images.

The front camera 5 has a field of view 7, the aperture angle of which can for example be in a range of values from 60° to 150°. The field of view 7 of the front camera 5 is oriented to the front in direction of travel such that the front camera 5 captures the environmental region 3 in front of the motor vehicle 1.

Based on the captured images, the control device 6 can detect light sources of other vehicles and switch the headlights 2 from the high beam mode to the glare shield mode depending on the detected light sources. In particular, it is provided that every time a light source of another vehicle is in the field of view 7 of the front camera 5, the glare shield mode is activated. Presently, the interest is directed to the determination of the point of time of switching between the high beam mode on the one hand and the glare shield mode on the other hand, if the external light sources enter the field of view 7 or else exit this field of view 7. For determining these points of time, at least one object detection device is additionally used.

Therein, at least one ultrasonic sensor 8, 9, 10, 11 disposed on the front bumper and/or at least one ultrasonic sensor 12, 13, 14, 15 disposed on the rear bumper and/or a camera 16 incorporated in the left exterior mirror and/or a camera 17 incorporated in the right exterior mirror can be used as the object detection device. Additionally or alternatively, further distance sensors can also be employed, which for example include at least one radar device and/or at least one Lidar device (not shown).

In particular, the use of the ultrasonic sensors 8, 11 is particularly advantageous, which are disposed in the respective edge regions of the front bumper and thus sense the lateral environmental regions besides the motor vehicle 1, namely both on the left side and on the right side of the motor vehicle 1. Therein, the main sensing directions of these ultrasonic sensors 8, 11 can be oriented along the vehicle transverse axis y and thus perpendicularly to the vehicle longitudinal axis x such that these ultrasonic sensors 8, 11 can measure distances in the vehicle transverse direction y. These ultrasonic sensors 8, 11 can be a component of an automatic parking assistance system of the motor vehicle 1. The remaining ultrasonic sensors 9, 10, 12, 13, 14, 15 can be associated with a parking assist system of the motor vehicle 1.

The number as well as the arrangement of the object detection devices 8 to 17 is only exemplarily illustrated in Fig. 1. Basically, any object detection devices can be employed, which are formed for detecting other vehicles and in particular also for determining the relative position of a further vehicle with respect to the motor vehicle 1. For determining this relative position, the images of the lateral cameras 16, 17 can also be used.

The at least one object detection device 8 to 17 is electrically coupled to the control device 6 such that the control device 6 receives the sensor data of the at least one object detection device 8 to 17, thus, for example the measured values of the ultrasonic sensors 8 to 15 and/or the images of the cameras 16, 17. In particular in a passing maneuver, if the motor vehicle 1 passes a further vehicle or else is passed itself by a further vehicle, the control device 6 can determine the relative position of the two vehicles in direction of travel 18 based on the sensor data of at least one of the object detection devices 8 to 17.

Depending on this relative position, then, the two headlights 2 are switched to the glare shield mode or else the high beam mode. If the motor vehicle 1 is passed by a further vehicle, thus, the activation of the glare shield mode is preferably effected when the further vehicle protrudes from the motor vehicle 1 in direction of travel 18 or reaches the front 19 of the motor vehicle 1. In contrast, if a further vehicle is passed by the motor vehicle 1, thus, the deactivation of the glare shield mode is preferably not effected before the headlights 2 reach the front or the exterior mirror of the other vehicle or protrude from the other vehicle in direction of travel 18.

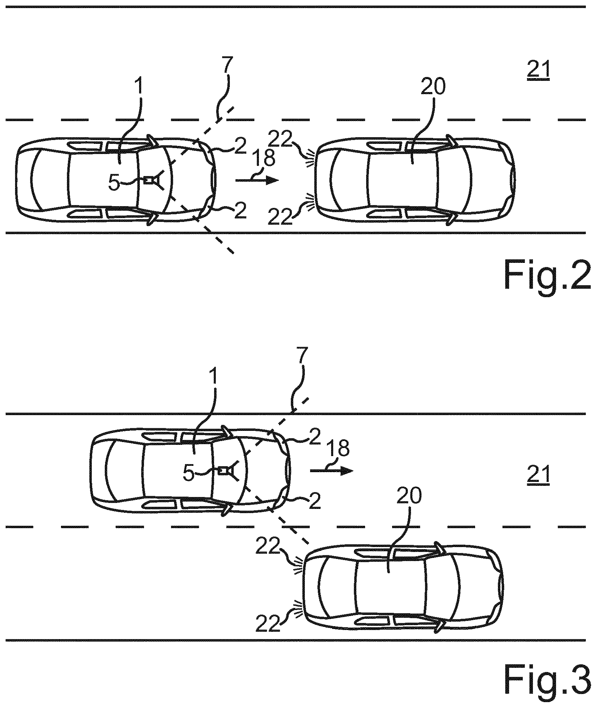

These two situations are now explained in more detail with reference to Fig. 2 to 7.

In Fig. 2 to 4, a road situation is illustrated, in which the own motor vehicle 1 passes a further vehicle 20, namely a further passenger car. Therein, the vehicles 1, 20 are on a road 21, for instance a rural road. First, the motor vehicle 1 moves behind the vehicle 20 according to Fig. 2, such that the tail lamps 22 of the vehicle 20 are in the field of view 7 of the front camera 5. Thus, the glare shield mode of the headlights 2 is activated. According to Fig. 3, now, the lane is changed, and the motor vehicle 1 moves on the left lane such that the tail lamps 22 exit the field of view 7 of the front camera 5. In the prior art, now, the glare shield mode would be deactivated. However, in the present embodiment, the glare shield mode is further maintained. Thus, the driver of the vehicle 20 is prevented from being glared via the exterior mirror.

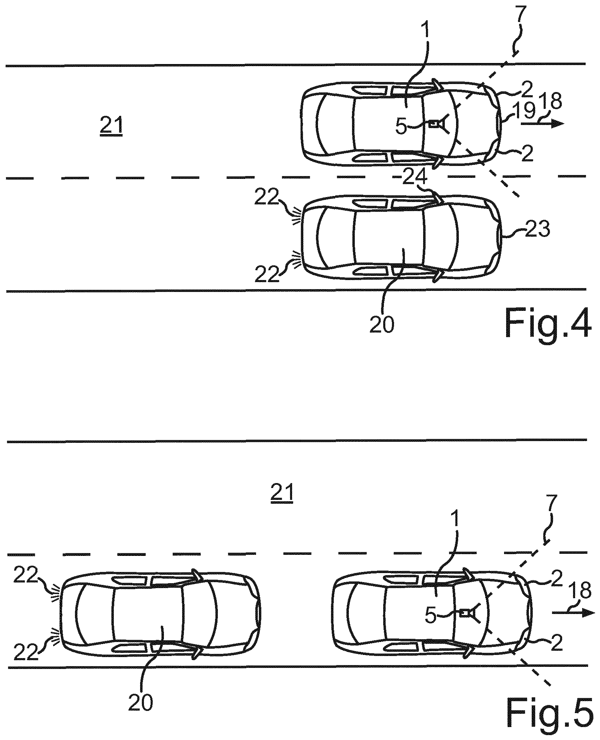

During the passing maneuver, the control device 6 continuously determines the current relative position of the two vehicles 1, 20 relative to each other in direction of travel 18. This relative position is determined based on the sensor data of at least one of the object detection devices 8 to 17. Only if it is identified by means of the control device 6 that the headlights 2 are on the same level as the headlights of the vehicle 20 and thus protrude from the vehicle 20, the glare shield mode is deactivated and the high beam is again activated. Such a situation is illustrated in Fig. 4.

The deactivation of the glare shield mode and the activation of the high beam are effected in Fig. 4 when the control device 6 identifies based on the sensor data of the at least one object detection device 8 to 17 that the front 19 of the motor vehicle 1 or else the headlights 2 reach a reference point of the vehicle 20 and thus protrude from this reference point in direction of travel 18. Therein, a front 23 of the vehicle 20 or else an exterior mirror 24 can serve as the reference point. Thus, it is excluded that the driver of the vehicle 20 is glared via the exterior mirror 24.

In contrast, in Fig. 5 to 7, a road situation is illustrated, in which the motor vehicle 1 is passed by the further vehicle 20. In the initial situation, the motor vehicle 1 is on the same lane in front of the vehicle 20 as illustrated in Fig. 5. In this initial situation, there is no further vehicle and also no external light source in front of the motor vehicle 1 such that the glare shield mode is turned off and the high beam is activated.

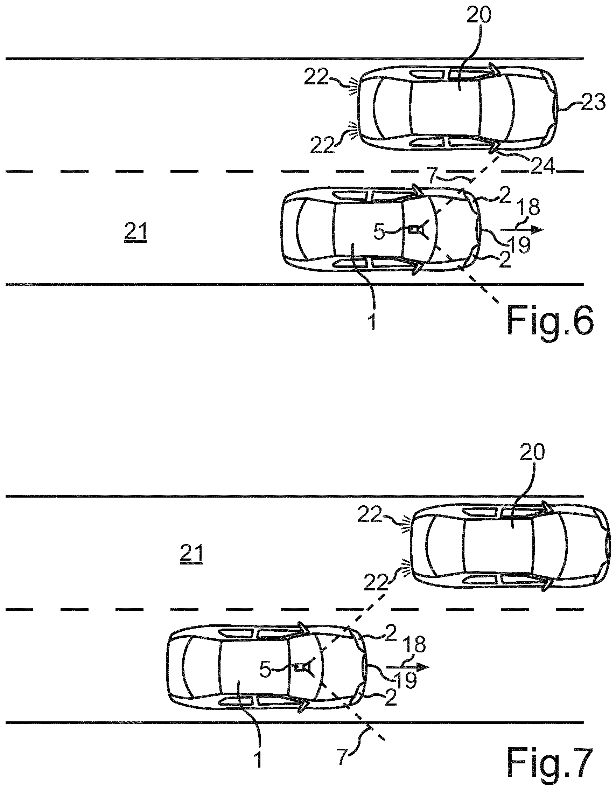

Now, the vehicle 20 begins its travel maneuver and changes the lane. According to Fig. 6, the vehicle 20 is already on the left lane and passes the motor vehicle 1. If it is determined by the control device 6 based on the sensor data of the at least one object detection device 8 to 17, that the vehicle 20 protrudes from the own motor vehicle 1 in direction of travel 18 or is already in front of the motor vehicle 1, such that the front of the vehicle 20 is in front of the front 19 of the motor vehicle 1, thus, the control device 6 turns on the glare shield mode and deactivates the high beam.

Generally, the activation of the glare shield mode is effected in Fig. 6 already when the control device 6 identifies based on the sensor data of the at least one object detection device 8 to 17 that the front 23 or else the exterior mirror 24 of the vehicle 20 protrudes from the headlights 2 of the motor vehicle 1 in direction of travel 18.

At this time - as illustrated in Fig. 6 - the tail lamps 22 of the vehicle 20 are still outside of the field of view 7 of the front camera 5 such that light sources cannot be detected in the images. Nevertheless, the activation of the glare shield mode is already effected at this early time before the tail lamps 22 reach the field of view 7 of the front camera 5. Then, the vehicle 20 moves even further away from the motor vehicle 1 as it is illustrated in Fig. 7. The tail lamps 22 of the vehicle 20 then enter the field of view 7 of the front camera 5 such that the glare shield mode is maintained due to the detection of the tail lamps 22 in the images of the front camera 5. This glare shield mode can remain turned on until the vehicle 20 is as far away from the motor vehicle 1 as the tail lamps 22 cannot be detected in the images of the front camera 5 anymore.

The determination of the relative position of the vehicles 1, 20 in direction of travel 18 can be effected at least with the aid of the ultrasonic sensors 8, 11, which measure the distance to the vehicle 20 in vehicle transverse direction y. With the aid of these ultrasonic sensors 8, 11, thus, the front 23 of the vehicle 20 can be detected. If this front 23 passes the ultrasonic sensor 8 or 11, namely, a jump is detected in the temporal progression of the measured values of this ultrasonic sensor 8 or 11, and based on this jump, the control device 6 can determine on which level the vehicle 20 is with respect to the motor vehicle 1. For determining the relative position of the vehicles 1, 20, the further ultrasonic sensors and/or the mentioned radar device and/or the Lidar device and/or the cameras 16, 17 can also be used. The more sensor data is used, the more exactly the relative position of the two vehicles 1, 20 can be determined.

## Claims

1. Method for operating a frontal headlight device (2) of a vehicle (1), in which an image of an environmental region (3) in direction of travel (18) in front of the vehicle
(1) is captured by means of a camera (5) of the vehicle (1), and the headlight device
(2) is switched to a glare shield mode by means of an electronic control device (6) of the vehicle (1) depending on whether a light source (22) of a further vehicle (20) is identified in the image, whereby the further vehicle (20) is detected and a relative position of the further vehicle (20) in direction of travel (18) relative to the vehicle (1) is determined based on sensor data of at least one object detection device (8 to 17) disposed on the vehicle (1), wherein switching of the headlight device (2) to the glare shield mode is also performed considering the relative position of the vehicle (1) and the further vehicle (20) in direction of travel (18) by means of the control device (6)
and **characterized in that**, after the light source of the further vehicle (20) has exited the field of view of the camera, the turned on glare shield mode is maintained if it is determined based on the sensor data of the object detection device (8 to 17) that the vehicle (1) passes the further vehicle (20).

2. Method according to claim 1,
**characterized in that**
if a light source (22) of the further vehicle (20) is not identified in the image by means of the control device (6) and it is identified based on the sensor data that the further vehicle (20) is on a lane adjacent to the vehicle (1), the position of the further vehicle (20) in direction of travel (18) relative to the vehicle (1) is determined based on the sensor data and switching of the headlight device (2) is performed depending on the relative position of the vehicles in direction of travel (18).

3. Method according to claim 1 or 2,
**characterized in that**
as soon as the external light source (22) is identified in the image, the consideration of the relative position in switching of the headlight device (2) is omitted.

4. Method according to anyone of the preceding claims,
**characterized in that**
if it is identified by means of the control device (6) that the light source (22) of the further vehicle (1) exits a field of view (7) of the camera (5), the turned on glare shield mode is deactivated depending on the relative position of the vehicles (1, 20) in direction of travel (18).

5. Method according to claim 4,
**characterized in that**
the glare shield mode is deactivated if it is determined based on the sensor data of the object detection device (8 to 17) that the headlight device (2) passes a predetermined reference point (23, 24) of the further vehicle (20) in direction of travel (18).

6. Method according to anyone of the preceding claims,
**characterized in that**
if a light source (22) of the further vehicle (20) is not identified in the image and it is detected based on the sensor data of the object detection device (8 to 17) that the further vehicle (20) passes the vehicle (1), the headlight device (2) is switched to the glare shield mode before the light source (22) of the further vehicle (20) is identified in the image.

7. Method according to claim 6,
**characterized in that**
the glare shield mode is already activated when it is determined based on the sensor data of the object detection device (8 to 17) that the headlight device (2) is behind a predetermined reference point (23, 24) of the further vehicle (20) in direction of travel (18).

8. Method according to anyone of the preceding claims,
**characterized in that**
a distance sensor (8, 11) is used as the object detection device (8 to 17), which is formed for detecting a distance to the further vehicle (20) as the sensor data and the sensing direction of which forms an angle from a range of values from 0°to 45°, in particular from a range of values from 0°to 20°, w ith the vehicle transverse axis (y).

9. Method according to anyone of the preceding claims,
**characterized in that**
an ultrasonic sensor (8 to 15) and/or a radar sensor and/or an optical sensor and/or a further camera (16, 17) is/are used as the object detection device (8 to 17) for capturing the sensor data.

10. Method according to anyone of the preceding claims,
**characterized in that**
a communication device is used as the object detection device (8 to 17), which wirelessly communicates with a communication device of the further vehicle (20) and which provides communication data as the sensor data, the communication data comprising information about a distance of the further vehicle (20) from the vehicle (1).

11. Driver assistance device for controlling a frontal headlight device (2) of a vehicle (1), comprising a camera (5) for capturing an image of an environmental region (3) in direction of travel (18) in front of the vehicle (1), and comprising an electronic control device (6), which is adapted to identify a light source (22) of a further vehicle (20) in the image and to switch the headlight device (2) to a glare shield mode depending on the identified light source (22), whereby the driver assistance device has an object detection device (8 to 17) for detecting the further vehicle (20) and the control device (6) is adapted to determine a relative position of the further vehicle (20) in direction of travel (18) relative to the vehicle (1) based on sensor data of the object detection device (8 to 17) and to perform switching of the headlight device (2) to the glare shield mode also considering the relative position of the vehicle (1) and the further vehicle (20) in direction of travel (18), the driver assistance device being **characterized in that**
the control device is adapted to maintain the turned on glare shield mode after the light source of the further vehicle has exited the field of view of the camera if it is determined based on the sensor data of the object detection device (8 to 17) that the headlight device (2) passes a predetermined reference point (23, 24) of the further vehicle (20) in direction of travel (18).

12. Vehicle (1) with a driver assistance device according to claim 11.

## Patentansprüche

1. Verfahren zum Betreiben einer Frontscheinwerfervorrichtung (2) eines Fahrzeugs (1), bei der ein Bild eines Umgebungsgebiets (3) in Bewegungsrichtung (18) vor dem Fahrzeug (1) mittels einer Kamera (5) des Fahrzeugs (1) erfasst wird und die Scheinwerfervorrichtung (2) in einen Blendschutzmodus mittels einer elektronischen Steuervorrichtung (6) des Fahrzeugs (1) in Abhängigkeit davon, ob eine Lichtquelle (22) eines weiteren Fahrzeugs (20) in dem Bild erkannt wird, geschaltet wird,
wobei:
das weitere Fahrzeug (20) detektiert wird und eine relative Position des weiteren Fahrzeugs (20) in Bewegungsrichtung (18) relativ zu dem Fahrzeug (1) basierend auf Sensordaten von wenigstens einer Objektdetektionsvorrichtung (8 bis 17), die auf dem Fahrzeug (1) angeordnet ist, bestimmt wird, wobei das Schalten der Scheinwerfervorrichtung (2) in den Blendschutzmodus ebenfalls unter Berücksichtigung der relativen Position des Fahrzeugs (1) und des weiteren Fahrzeugs (20) in Bewegungsrichtung (18) mittels der Steuervorrichtung (6) durchgeführt wird,
und **dadurch gekennzeichnet, dass**
der eingeschaltete Blendschutzmodus beibehalten wird, nachdem die Lichtquelle des weiteren Fahrzeugs (20) das Sichtfeld der Kamera verlassen hat, falls basierend auf den Sensordaten der Objektdetektionsvorrichtung (8 bis 17) bestimmt wird, dass das Fahrzeug (1) das weitere Fahrzeug (20) passiert.

2. Verfahren nach Anspruch 1, **dadurch gekennzeichnet, dass**
falls eine Lichtquelle (22) des weiteren Fahrzeugs (20) in dem Bild nicht mittels der Steuervorrichtung (6) identifiziert wird und basierend auf den Sensordaten identifiziert wird, dass sich das weitere Fahrzeug (20) in einer Spur angrenzend zu dem Fahrzeug (1) befindet, die Position des weiteren Fahrzeugs (20) in Bewegungsrichtung (18) relativ zu dem Fahrzeug (1) basierend auf den Sensordaten bestimmt wird und das Schalten der Scheinwerfervorrichtung (2) in Abhängigkeit von der relativen Position der Fahrzeuge in Bewegungsrichtung (18) durchgeführt wird.

3. Verfahren nach Anspruch 1 oder 2, **dadurch gekennzeichnet, dass**
sobald die externe Lichtquelle (22) in dem Bild identifiziert wird, die Berücksichtigung der relativen Position beim Schalten der Scheinwerfervorrichtung (2) weggelassen wird.

4. Verfahren nach einem der vorhergehenden Ansprüche, **dadurch gekennzeichnet, dass**
falls mittels der Steuervorrichtung (6) identifiziert wird, dass die Lichtquelle (22) des weiteren Fahrzeugs (1) ein Sichtfeld (7) der Kamera (5) verlässt, der eingeschaltete Blendschutzmodus in Abhängigkeit von der relativen Position der Fahrzeuge (1,20) in Bewegungsrichtung (18) deaktiviert wird.

5. Verfahren nach Anspruch 4, **dadurch gekennzeichnet, dass**
der Blendschutzmodus deaktiviert wird, falls basierend auf den Sensordaten der Objektdetektionsvorrichtung (8 bis 17) bestimmt wird, dass die Scheinwerfervorrichtung (2) einen vorbestimmten Referenzpunkt (23, 24) des weiteren Fahrzeugs (20) in Bewegungsrichtung (18) passiert.

6. Verfahren nach einem der vorhergehenden Ansprüche, **dadurch gekennzeichnet, dass**
falls eine Lichtquelle (22) des weiteren Fahrzeugs (20) nicht in dem Bild identifiziert wird und basierend auf den Sensordaten der Objektdetektionsvorrichtung (8 bis 17) detektiert wird, dass das weitere Fahrzeug (20) das Fahrzeug (1) passiert, die Scheinwerfervorrichtung (2) in den Blendschutzmodus geschaltet wird, bevor die Lichtquelle (22) des weiteren Fahrzeugs (20) in dem Bild identifiziert wird.

7. Verfahren nach Anspruch 6, **dadurch gekennzeichnet, dass**
der Blendschutzmodus bereits aktiviert ist, wenn basierend auf den Sensordaten der Objektdetektionsvorrichtung (8 bis 17) bestimmt wird, dass die Scheinwerfervorrichtung (2) hinter einem vorbestimmten Referenzpunkt (23, 24) des weiteren Fahrzeugs (20) in Bewegungsrichtung (18) ist.

8. Verfahren nach einem der vorhergehenden Ansprüche, **dadurch gekennzeichnet, dass**
ein Abstandssensor (8, 11) als die Objektdetektionsvorrichtung (8 bis 17) verwendet wird, welche zum Detektieren eines Abstands zu dem weiteren Fahrzeug (20) als die Sensordaten gebildet ist, und die Erfassungsrichtung von diesem einen Winkel in einem Wertebereich von 0° bis 45°, insbesondere in einem Wertebereich von 0° bis 20°, mit der Fahrzeugquerachse (y) bildet.

9. Verfahren nach einem der vorhergehenden Ansprüche, **dadurch gekennzeichnet, dass**
ein Ultraschallsensor (8 bis 15) und/oder ein Radarsensor und/oder ein optischer Sensor und/oder eine weitere Kamera (16, 17) als die Objektdetektionsvorrichtung (8 bis 17) zum Erfassen der Sensordaten verwendet wird/werden.

10. Verfahren nach einem der vorhergehenden Ansprüche, **dadurch gekennzeichnet, dass**
eine Kommunikationsvorrichtung als die Objektdetektionsvorrichtung (8 bis 17) verwendet wird, die drahtlos mit einer Kommunikationsvorrichtung des weiteren Fahrzeugs (20) kommuniziert und die Kommunikationsdaten als die Sensordaten bereitstellt, wobei die Kommunikationsdaten Informationen über einen Abstand des weiteren Fahrzeugs (20) von dem Fahrzeug (1) umfassen.

11. Fahrerassistenzvorrichtung zum Steuern einer Frontscheinwerfervorrichtung (2) eines Fahrzeugs (1), die eine Kamera (5) zum Erfassen eines Bildes eines Umgebungsgebiets (3) in Bewegungsrichtung (18) vor dem Fahrzeug (1) umfasst und eine elektronische Steuervorrichtung (6) umfasst, die dazu ausgelegt ist, eine Lichtquelle (22) eines weiteren Fahrzeugs (20) in dem Bild zu identifizieren und die Scheinwerfervorrichtung (2) in einen Blendschutzmodus in Abhängigkeit von der identifizierten Lichtquelle (22) zu schalten,
wobei:
die Fahrerassistenzvorrichtung eine Objektdetektionsvorrichtung (8 bis 17) zum Detektieren des weiteren Fahrzeugs (20) aufweist und die Steuervorrichtung (6) dazu ausgelegt ist, eine relative Position des weiteren Fahrzeugs (20) in Bewegungsrichtung (18) relativ zu dem Fahrzeug (1) basierend auf Sensordaten von der Objektdetektionsvorrichtung (8 bis 17) zu bestimmen und das Schalten der Scheinwerfervorrichtung (2) in den Blendschutzmodus auch unter Berücksichtigung der relativen Position des Fahrzeugs (1) und des weiteren Fahrzeugs (20) in Bewegungsrichtung (18) durchzuführen, wobei die Fahrerassistenzvorrichtung **dadurch gekennzeichnet ist, dass**
die Steuervorrichtung dazu ausgelegt ist, den eingeschalteten Blendschutzmodus beizubehalten, nachdem die Lichtquelle des weiteren Fahrzeugs das Sichtfeld der Kamera verlassen hat, falls basierend auf den Sensordaten der Objektdetektionsvorrichtung (8 bis 17) bestimmt wird, dass die Scheinwerfervorrichtung (2) einen vorbestimmten Referenzpunkt (23, 24) des weiteren Fahrzeugs (20) in Bewegungsrichtung (18) passiert.

12. Fahrzeug (1) mit einer Fahrerassistenzvorrichtung nach Anspruch 11.

## Revendications

1. Procédé pour actionner un dispositif de phare frontal (2) d'un véhicule (1), dans lequel une image d'une région environnementale (3) dans la direction de déplacement (18) à l'avant du véhicule (1) est capturée à l'aide d'une caméra (5) du véhicule (1), et le dispositif de phare (2) est commuté à un mode de protection contre l'éblouissement à l'aide d'un dispositif de commande électronique (6) du véhicule (1) en fonction du fait qu'une source de lumière (22) d'un autre véhicule (20) est ou non identifiée dans l'image, que l'autre véhicule (20) est ou non détecté et qu'une position relative de l'autre véhicule (20) dans la direction de déplacement (18) par rapport au véhicule (1) est déterminée sur la base de données de capteur d'au moins un dispositif de détection d'objet (8 à 17) disposé sur le véhicule (1),
la commutation du dispositif de phare (2) au mode de protection contre l'éblouissement étant également effectuée en tenant compte de la position relative du véhicule (1) et de l'autre véhicule (20) dans la direction de déplacement (18) à l'aide du dispositif de commande (6) et **caractérisé en ce que**, après que la source de lumière de l'autre véhicule (20) a quitté le champ de vision de la caméra, le mode de protection contre l'éblouissement allumé est maintenu s'il est déterminé sur la base des données de capteur du dispositif de détection d'objet (8 à 17) que le véhicule (1) dépasse l'autre véhicule (20).

2. Procédé selon la revendication 1,
**caractérisé en ce que**
si une source de lumière (22) de l'autre véhicule (20) n'est pas identifiée dans l'image à l'aide du dispositif de commande (6) et qu'il est identifié sur la base des données de capteur que l'autre véhicule (20) se trouve sur une voie adjacente au véhicule (1), la position de l'autre véhicule (20) dans la direction de déplacement (18) par rapport au véhicule (1) est déterminée sur la base des données de capteur et la commutation du dispositif de phare (2) est effectuée en fonction de la position relative des véhicules dans la direction de déplacement (18).

3. Procédé selon la revendication 1 ou 2,
**caractérisé en ce que**
dès que la source de lumière externe (22) est identifiée dans l'image, la considération de la position relative lors de la commutation du dispositif de phare (2) est omise.

4. Procédé selon l'une quelconque des revendications précédentes,
**caractérisé en ce que**
s'il est identifié à l'aide du dispositif de commande (6) que la source de lumière (22) de l'autre véhicule (1) sort d'un champ de vision (7) de la caméra (5), le mode de protection contre l'éblouissement allumé est désactivé en fonction de la position relative des véhicules (1, 20) dans la direction de déplacement (18).

5. Procédé selon la revendication 4,
**caractérisé en ce que**
le mode de protection contre l'éblouissement est désactivé s'il est déterminé sur la base des données de capteur du dispositif de détection d'objet (8 à 17) que le dispositif de phare (2) passe à un point de référence prédéterminé (23, 24) de l'autre véhicule (20) dans la direction de déplacement (18).

6. Procédé selon l'une quelconque des revendications précédentes,
**caractérisé en ce que**, si une source de lumière (22) de l'autre véhicule (20) n'est pas identifiée dans l'image et s'il est détecté sur la base des données de capteur du dispositif de détection d'objet (8 à 17) que l'autre véhicule (20) dépasse le véhicule (1), le dispositif de phare (2) est commuté au mode de protection contre l'éblouissement avant que la source de lumière (22) de l'autre véhicule (20) soit identifiée dans l'image.

7. Procédé selon la revendication 6,
**caractérisé en ce que**
le mode de protection contre l'éblouissement est déjà activé lorsqu'il est déterminé sur la base des données de capteur du dispositif de détection d'objet (8 à 17) que le dispositif de phare (2) se trouve derrière un point de référence prédéterminé (23, 24) de l'autre véhicule (20) dans la direction de déplacement (18).

8. Procédé selon l'une quelconque des revendications précédentes,
**caractérisé en ce que**
un capteur de distance (8, 11) est utilisé comme dispositif de détection d'objet (8 à 17) qui est formé pour détecter une distance par rapport à l'autre véhicule (20) en tant que données de capteur et dont la direction de détection forme un angle à partir d'une plage de valeurs allant de 0° à 45°, en particulier à partir d'une plage de valeurs allant de 0° à 20°, avec l'axe transversal du véhicule (y).

9. Procédé selon l'une quelconque des revendications précédentes,
**caractérisé en ce que**
un capteur à ultrasons (8 à 15) et/ou un capteur radar et/ou un capteur optique et/ou une autre caméra (16, 17) est/sont utilisé/utilisée/utilisés en tant que dispositif de détection d'objet (8 à 17) pour capturer les données de capteur.

10. Procédé selon l'une quelconque des revendications précédentes,
**caractérisé en ce que**
un dispositif de communication est utilisé en tant que dispositif de détection d'objet (8 à 17) qui communique sans fil avec un dispositif de communication de l'autre véhicule (20) et qui fournit des données de communication en tant que données de capteur, les données de communication comprenant des informations concernant une distance de l'autre véhicule (20) au véhicule (1).

11. Dispositif d'assistance de conducteur destiné à commander un dispositif de phare frontal (2) d'un véhicule (1), comprenant une caméra (5) pour capturer une image d'une région environnementale (3) dans la direction de déplacement (18) à l'avant du véhicule (1), et comprenant un dispositif de commande électronique (6), qui est adapté pour identifier une source de lumière (22) d'un autre véhicule (20) dans l'image et pour commuter le dispositif de phare (2) au mode de protection contre l'éblouissement en fonction de la source de lumière identifiée (22),
le dispositif d'assistance de conducteur comprenant un dispositif de détection d'objet (8 à 17) pour détecter l'autre véhicule (20) et le dispositif de commande (6) étant adapté pour déterminer une position relative de l'autre véhicule (20) dans la direction de déplacement (18) par rapport au véhicule (1) sur la base de données de capteur du dispositif de détection d'objet (8 à 17) et pour effectuer une commutation du dispositif de phare (2) au mode de protection contre l'éblouissement en tenant compte également de la position relative du véhicule (1) et de l'autre véhicule (20) dans la direction de déplacement (18), le dispositif d'assistance de conducteur étant **caractérisé en ce que** le dispositif de commande est adapté pour maintenir le mode de protection contre l'éblouissement allumé après que la source de lumière de l'autre véhicule a quitté le champ de vision de la caméra s'il est déterminé sur la base des données de capteur du dispositif de détection d'objet (8 à 17) que le dispositif de phare (2) passe à un point de référence prédéterminé (23, 24) de l'autre véhicule (20) dans la direction de déplacement (18).

12. Véhicule (1) équipé d'un dispositif d'assistance au conducteur selon la revendication 11.
